# EUROPEAN PATENT APPLICATION

(11) **EP 4 472 252 A2**
(43) Date of publication of application: **04.12.2024**
(21) Application number: 24177226.8
(22) Date of filing: 22.05.2024
(51) Int. Cl.: H04W 4/70, H04W 4/80, H04W 52/00, H04W 72/00, H04W 84/18

(54) **METHOD, APPARATUS AND COMPUTER PROGRAM**

(30) Priority: 02.06.2023 GB 202308260
(71) Applicant: Nokia Technologies Oy, 02610 Espoo (FI)
(72) Inventor: VEJLGAARD, Benny, Gistrup (DK); BARBU, Oana-Elena, Aalborg (DK); HARREBEK, Johannes, Aalborg (DK); SVENDSEN, Simon, Aalborg (DK); KIILERICH PRATAS, Nuno Manuel, Aalborg (DK)
(74) Representative: Nokia EPO representatives

(57) **Abstract**

There is provided an apparatus comprising: means for obtaining, from a configuration, a first characteristic associated with response signals to be received from a passive device, and means for receiving, from the passive device, at least one response signal. The apparatus further comprising means for determining that a second characteristic of the at least one response signal is different to the first characteristic.

## Description

### Field

The present application relates to a method, apparatus, and computer program for a wireless communication system.

### Background

A communication system may be a facility that enables communication sessions between two or more entities such as user terminals, base stations/access points and/or other nodes by providing carriers between the various entities involved in the communications path. A communication system may be provided, for example, by means of a communication network and one or more compatible communication devices. The communication sessions may comprise, for example, communication of data for carrying communications such as voice, electronic mail (email), text message, multimedia and/or content data and so on. Non-limiting examples of services provided comprise two-way or multi-way calls, data communication or multimedia services and access to a data network system, such as the Internet.

### Summary

According to an aspect, there is provided an apparatus comprising: means for obtaining, from a configuration, a first characteristic associated with response signals to be received from a passive device; means for receiving, from the passive device, at least one response signal; and means for determining that a second characteristic of the at least one response signal is different to the first characteristic.

In an example, the configuration is associated with the passive device.

In an example, the means for obtaining comprises one of: means for receiving, from an activator device, a message corresponding to the configuration for the passive device, wherein the configuration indicates the first characteristic associated with the response signals; and means for retrieving the first characteristic of the configuration from a data store.

In an example, the apparatus comprises: means for providing, to a network function, a message based on the determination that the second characteristic of the received at least one response signal is different to the first characteristic.

In an example, the means for providing comprises: means for, based on the determining, providing a message to a network function indicating that a reselection procedure should be triggered for the passive device.

In an example, the means for determining comprises: means for determining that the passive device has insufficient energy to transmit a response signal as per the configuration on the basis of the second characteristic of the received at least one response signal being different to the first characteristic.

In an example, the first characteristic comprises a first duty cycle, wherein the means for determining comprises: means for determining that the received at least one response signal has a second duty cycle, wherein the second duty cycle is different to the first duty cycle.

In an example, the first characteristic comprises a first data rate, wherein the means for determining comprises: means for determining that the received at least one response signal has a second data rate, wherein the second data rate is different to the first data rate.

In an example, the means for determining comprises: means for determining that at least one further response signal has a third characteristic, wherein the third characteristic is different to the first and second characteristics; means for determining, based on the second and third characteristics, an estimated time that the passive device will remain in coverage.

In an example, the first, second and third characteristics are all different duty cycles. In an example, the first duty cycle is the largest, and the third duty cycle is the smallest.

In an example, the means for providing comprises: providing, to the network function, information about the estimated time.

In an example, the determining that the at least one response signal has a third duty cycle comprises: means for determining a change in duty cycle of the at least one response signal.

In an example, the apparatus comprises: means for determining that at least one response signal comprises an indication of an identity of the passive device without any payload data.

In an example, the apparatus comprises: means for, in response to determining that at least one response signal comprises an indication of an identity of the passive device without any payload data, providing, to a network function, a message indicating that the passive device is moving out of coverage.

In an example, one of: the apparatus is for the reader device, the apparatus is comprised in the reader device, and the apparatus is the reader device.

In an example, the reader device is an ambient internet of things reader device.

According to an aspect, there is provided an apparatus comprising: means for obtaining, from a configuration, a first characteristic associated with response signals to be provided from a passive device; means for receiving, from an activator device, an activation signal; and means for, in response to determining that energy received from the activation signal is below a threshold value, providing, to a reader device, at least one response signal with a second characteristic, wherein the first characteristic and the second characteristic are different.

In an example, the means for providing comprises: means for, in response to determining that energy received from the activation signal is below a threshold value, reflecting and modulating the activation signal to provide, to a reader device, the at least one response signal with the second characteristic.

In an example, the first characteristic comprises a first duty cycle, wherein the means for providing comprises: means for, in response to determining that energy received from the activation signal is below a threshold value, providing, to the reader device, the at least one response signal with a second duty cycle, wherein the first duty cycle and the second duty cycle are different.

In an example, the first characteristic comprises a first data rate, wherein the means for providing comprises: means for, in response to determining that energy received from the activation signal is below a threshold value, providing, to the reader device, the at least one response signal with a second data rate, wherein the first data rate and the second data rate are different.

In an example, at least one of: the second duty cycle is reduced with respect to the first duty cycle, and the second data rate is reduced with respect to the first data rate.

In an example, the apparatus comprises: means for receiving, from the activator device, a further activation signal; means for, in response to determining that energy received from the further activation signal is less than the energy received from the activation signal, providing, to the reader device, at least one further response signal with a third characteristic, wherein the third characteristic is different to the first and second characteristics.

In an example, the means for providing comprises: means for, in response to determining that energy received from the activation signal is below a threshold value, providing, to the reader device, the at least one response signal with a second characteristic, wherein the at least one response signal comprises an identity of the passive device without any payload data.

In an example, the means for providing comprises: means for refraining from including payload data in the at least one response signal when the energy received from the activation signal is below the threshold value.

In an example, the characteristic of the at least one response signal and/or the at least one further response signal is proportional to energy received from the activation signal and/or the further activation signal respectively.

In an example, one of: the apparatus is for the passive device, the apparatus is comprised in the passive device, and the apparatus is the passive device.

In an example, the passive device is an ambient internet of things device.

According to an aspect, there is provided a method comprising: obtaining, from a configuration, a first characteristic associated with response signals to be received from a passive device; receiving, from the passive device, at least one response signal; and determining that a second characteristic of the at least one response signal is different to the first characteristic.
In an example, the configuration is associated with the passive device.

In an example, the obtaining comprises one of: receiving, from an activator device, a message corresponding to the configuration for the passive device, wherein the configuration indicates the first characteristic associated with the response signals; and retrieving the first characteristic of the configuration from a data store.

In an example, the method comprises: providing, to a network function, a message based on the determination that the second characteristic of the received at least one response signal is different to the first characteristic.

In an example, the providing comprises: based on the determining, providing a message to a network function indicating that a reselection procedure should be triggered for the passive device.

In an example, the determining comprises: determining that the passive device has insufficient energy to transmit a response signal as per the configuration on the basis of the second characteristic of the received at least one response signal being different to the first characteristic.

In an example, the first characteristic comprises a first duty cycle, wherein the determining comprises: determining that the received at least one response signal has a second duty cycle, wherein the second duty cycle is different to the first duty cycle.

In an example, the first characteristic comprises a first data rate, wherein the determining comprises: determining that the received at least one response signal has a second data rate, wherein the second data rate is different to the first data rate.

In an example, the determining comprises: determining that at least one further response signal has a third characteristic, wherein the third characteristic is different to the first and second characteristics; determining, based on the second and third characteristics, an estimated time that the passive device will remain in coverage.

In an example, the first, second and third characteristics are all different duty cycles. In an example, the first duty cycle is the largest, and the third duty cycle is the smallest.

In an example, the providing comprises: providing, to the network function, information about the estimated time.

In an example, the determining that the at least one response signal has a third duty cycle comprises: determining a change in duty cycle of the at least one response signal.

In an example, the apparatus comprises: determining that at least one response signal comprises an indication of an identity of the passive device without any payload data.

In an example, the method comprises: in response to determining that at least one response signal comprises an indication of an identity of the passive device without any payload data, providing, to a network function, a message indicating that the passive device is moving out of coverage.

In an example, the method is performed by a reader device.

In an example, the reader device is an ambient internet of things reader device.

According to an aspect, there is provided a method comprising: obtaining, from a configuration, a first characteristic associated with response signals to be provided from a passive device; receiving, from an activator device, an activation signal; and in response to determining that energy received from the activation signal is below a threshold value, providing, to a reader device, at least one response signal with a second characteristic, wherein the first characteristic and the second characteristic are different.

In an example, the providing comprises: in response to determining that energy received from the activation signal is below a threshold value, reflecting and modulating the activation signal to provide, to a reader device, the at least one response signal with the second characteristic.

In an example, the first characteristic comprises a first duty cycle, wherein the providing comprises: in response to determining that energy received from the activation signal is below a threshold value, providing, to the reader device, the at least one response signal with a second duty cycle, wherein the first duty cycle and the second duty cycle are different.

In an example, the first characteristic comprises a first data rate, wherein the providing comprises: in response to determining that energy received from the activation signal is below a threshold value, providing, to the reader device, the at least one response signal with a second data rate, wherein the first data rate and the second data rate are different.

In an example, at least one of: the second duty cycle is reduced with respect to the first duty cycle, and the second data rate is reduced with respect to the first data rate.

In an example, the method comprises: receiving, from the activator device, a further activation signal; in response to determining that energy received from the further activation signal is less than the energy received from the activation signal, providing, to the reader device, at least one further response signal with a third characteristic, wherein the third characteristic is different to the first and second characteristics.

In an example, the providing comprises: in response to determining that energy received from the activation signal is below a threshold value, providing, to the reader device, the at least one response signal with a second characteristic, wherein the at least one response signal comprises an identity of the passive device without any payload data.

In an example, the providing comprises: refraining from including payload data in the at least one response signal when the energy received from the activation signal is below the threshold value.

In an example, the characteristic of the at least one response signal and/or the at least one further response signal is proportional to energy received from the activation signal and/or the further activation signal respectively.

In an example, the method is performed by the passive device.

In an example, the passive device is an ambient internet of things device.

According to an aspect, there is provided a computer program comprising instructions, which when executed by an apparatus, cause the apparatus to perform at least the following: obtaining, from a configuration, a first characteristic associated with response signals to be received from a passive device; receiving, from the passive device, at least one response signal; and determining that a second characteristic of the at least one response signal is different to the first characteristic.

According to an aspect, there is provided a computer program comprising instructions, which when executed by an apparatus, cause the apparatus to perform at least the following: obtaining, from a configuration, a first characteristic associated with response signals to be provided from a passive device; receiving, from an activator device, an activation signal; and in response to determining that energy received from the activation signal is below a threshold value, providing, to a reader device, at least one response signal with a second characteristic, wherein the first characteristic and the second characteristic are different.

According to an aspect, there is provided an apparatus comprising: at least one processor, and at least one memory storing instructions that, when executed by the at least one processor, cause the apparatus to perform: obtaining, from a configuration, a first characteristic associated with response signals to be received from a passive device; receiving, from the passive device, at least one response signal; and determining that a second characteristic of the at least one response signal is different to the first characteristic.
In an example, the configuration is associated with the passive device.

In an example, the obtaining comprises one of: receiving, from an activator device, a message corresponding to the configuration for the passive device, wherein the configuration indicates the first characteristic associated with the response signals; and retrieving the first characteristic of the configuration from a data store.

In an example, the apparatus is caused to perform: providing, to a network function, a message based on the determination that the second characteristic of the received at least one response signal is different to the first characteristic.

In an example, the providing comprises: based on the determining, providing a message to a network function indicating that a reselection procedure should be triggered for the passive device.

In an example, the determining comprises: determining that the passive device has insufficient energy to transmit a response signal as per the configuration on the basis of the second characteristic of the received at least one response signal being different to the first characteristic.

In an example, the first characteristic comprises a first duty cycle, wherein the determining comprises: determining that the received at least one response signal has a second duty cycle, wherein the second duty cycle is different to the first duty cycle.

In an example, the first characteristic comprises a first data rate, wherein the determining comprises: determining that the received at least one response signal has a second data rate, wherein the second data rate is different to the first data rate.

In an example, the determining comprises: determining that at least one further response signal has a third characteristic, wherein the third characteristic is different to the first and second characteristics; determining, based on the second and third characteristics, an estimated time that the passive device will remain in coverage.

In an example, the first, second and third characteristics are all different duty cycles. In an example, the first duty cycle is the largest, and the third duty cycle is the smallest.

In an example, the providing comprises: providing, to the network function, information about the estimated time.

In an example, the determining that the at least one response signal has a third duty cycle comprises: determining a change in duty cycle of the at least one response signal.

In an example, the apparatus comprises: determining that at least one response signal comprises an indication of an identity of the passive device without any payload data.

In an example, the apparatus is caused to perform: in response to determining that at least one response signal comprises an indication of an identity of the passive device without any payload data, providing, to a network function, a message indicating that the passive device is moving out of coverage.

In an example, one of: the apparatus is for the reader device, the apparatus is comprised in the reader device, and the apparatus is the reader device.

In an example, the reader device is an ambient internet of things reader device.

According to an aspect, there is provided an apparatus comprising: at least one processor, and at least one memory storing instructions that, when executed by the at least one processor, cause the apparatus to perform: obtaining, from a configuration, a first characteristic associated with response signals to be provided from a passive device; receiving, from an activator device, an activation signal; and in response to determining that energy received from the activation signal is below a threshold value, providing, to a reader device, at least one response signal with a second characteristic, wherein the first characteristic and the second characteristic are different.

In an example, the providing comprises: in response to determining that energy received from the activation signal is below a threshold value, reflecting and modulating the activation signal to provide, to a reader device, the at least one response signal with the second characteristic.

In an example, the first characteristic comprises a first duty cycle, wherein the providing comprises: in response to determining that energy received from the activation signal is below a threshold value, providing, to the reader device, the at least one response signal with a second duty cycle, wherein the first duty cycle and the second duty cycle are different.

In an example, the first characteristic comprises a first data rate, wherein the providing comprises: in response to determining that energy received from the activation signal is below a threshold value, providing, to the reader device, the at least one response signal with a second data rate, wherein the first data rate and the second data rate are different.

In an example, at least one of: the second duty cycle is reduced with respect to the first duty cycle, and the second data rate is reduced with respect to the first data rate.

In an example, the apparatus is caused to perform: receiving, from the activator device, a further activation signal; in response to determining that energy received from the further activation signal is less than the energy received from the activation signal, providing, to the reader device, at least one further response signal with a third characteristic, wherein the third characteristic is different to the first and second characteristics.

In an example, the providing comprises: in response to determining that energy received from the activation signal is below a threshold value, providing, to the reader device, the at least one response signal with a second characteristic, wherein the at least one response signal comprises an identity of the passive device without any payload data.

In an example, the providing comprises: refraining from including payload data in the at least one response signal when the energy received from the activation signal is below the threshold value.

In an example, the characteristic of the at least one response signal and/or the at least one further response signal is proportional to energy received from the activation signal and/or the further activation signal respectively.

In an example, one of: the apparatus is for the passive device, the apparatus is comprised in the passive device, and the apparatus is the passive device.

In an example, the passive device is an ambient internet of things device.

According to an aspect, there is provided an apparatus comprising: circuitry configured to perform obtaining, from a configuration, a first characteristic associated with response signals to be received from a passive device; circuitry configured to perform receiving, from the passive device, at least one response signal; and circuitry configured to perform determining that a second characteristic of the at least one response signal is different to the first characteristic.

According to an aspect, there is provided an apparatus comprising: circuitry configured to perform obtaining, from a configuration, a first characteristic associated with response signals to be provided from a passive device; circuitry configured to perform receiving, from an activator device, an activation signal; and circuitry configured to perform, in response to determining that energy received from the activation signal is below a threshold value, providing, to a reader device, at least one response signal with a second characteristic, wherein the first characteristic and the second characteristic are different.

A computer product stored on a medium may cause an apparatus to perform the methods as described herein.

A non-transitory computer readable medium comprising program instructions, that, when executed by an apparatus, cause the apparatus to perform the methods as described herein.

An electronic device may comprise apparatus as described herein.

In the above, various aspects have been described. It should be appreciated that further aspects may be provided by the combination of any two or more of the various aspects described above.

Various other aspects and further embodiments are also described in the following detailed description and in the attached claims.

According to some aspects, there is provided the subject matter of the independent claims. Some further aspects are defined in the dependent claims. The embodiments that do not fall under the scope of the claims are to be interpreted as examples useful for understanding the disclosure.

### List of abbreviations:

- AF:: Application Function
- AMF:: Access and Mobility Management Function
- AN:: Access Network
- BS:: Base Station
- CSI:: Channel state information
- CN:: Core Network
- DL:: Downlink
- DMRS:: Demodulation reference sequence
- eNB:: eNodeB
- eMTC:: enhanced machine type communications
- gNB:: gNodeB
- HARQ:: Hybrid automatic repeat request
- IoT:: Internet of things
- IIoT:: Industrial Internet of Things
- LTE:: Long Term Evolution
- LMF:: Location management function
- LoRa:: Long range
- MAC:: Medium access control
- MS:: Mobile Station
- NB-IoT:: Narrowband internet of things
- NEF:: Network Exposure Function
- NG-RAN:: Next Generation Radio Access Network
- NF:: Network Function
- NR:: New Radio
- NRF:: Network Repository Function
- NW:: Network
- PCF: Policy Control Function
- PLMN:: Public Land Mobile Network
- RAN:: Radio Access Network
- RACH:: Random access channel
- RedCap:: Reduced capability
- RFID:: Radio frequency identity
- RRC:: Radio resource control
- RF:: Radio Frequency
- SDT:: Short data transmission
- SMF:: Session Management Function
- SR:: Scheduling request
- UCI:: Uplink control information
- UE:: User Equipment
- UDR:: Unified Data Repository
- UDM:: Unified Data Management
- UHF:: Ultra-high frequency
- UL:: Uplink
- UPF:: User Plane Function
- URLLC:: Ultra reliable low latency communication
- UWB:: Ultra-wideband
- WSN:: Wireless sensor network
- 3GPP:: 3^{rd} Generation Partnership Project
- 5G:: 5^{th} Generation
- 5GC:: 5G Core network
- 5G-AN:: 5G Radio Access Network
- 5GS:: 5G System

### Description of Figures

Embodiments will now be described, by way of example only, with reference to the accompanying Figures in which:
Figure 1 shows a schematic representation of a 5G system;
Figure 2 shows a schematic representation of a control apparatus;
Figure 3 shows a schematic representation of a terminal;
Figure 4 shows an example graphical representation of ambient IoT activation range and limitation with ambient IoT reader range and sensitivity;
Figure 5 shows an example graphical representation of normal ambient IoT activation and response signals;
Figure 6 show example graphical representations of ambient IoT activation and reduced response signals;
Figure 7 shows an example graphical representation of a duty cycle change from an ambient IoT device moving out of activation range;
Figure 8 shows an example signalling diagram between an activator, a passive device, a reader, and a network function;
Figure 9 shows an example method flow diagram performed by an apparatus;
Figure 10 shows another example method flow diagram performed by an apparatus; and
Figure 11 shows a schematic representation of a non-volatile memory medium storing instructions which when executed by a processor allow a processor to perform one or more of the steps of the method of Figure 9 and/or Figure 10.

### Detailed description

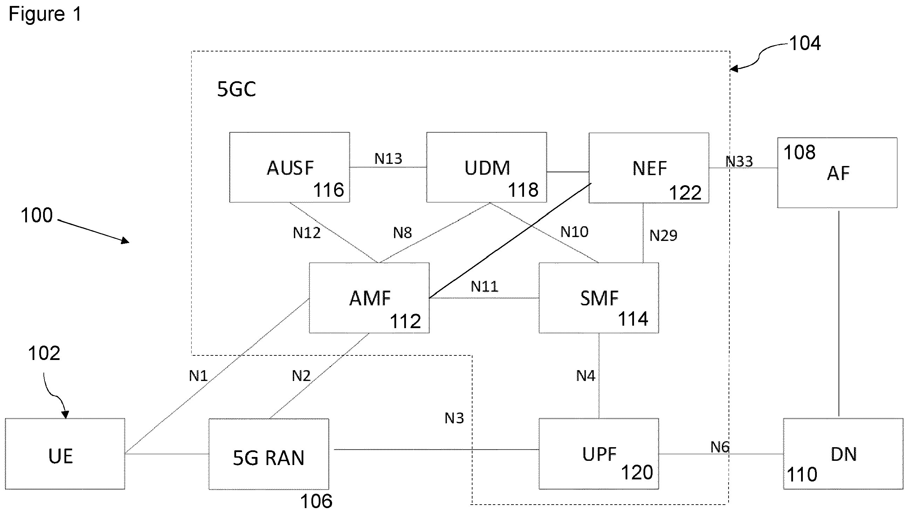

Before explaining in detail some examples of the present disclosure, certain general principles of a wireless communication system and mobile communication devices are briefly explained with reference to Figures 1 to 3 to assist in understanding the technology underlying the described examples.

In a wireless communication system 100, such as that shown in Figure 1, mobile communication devices/terminals or user apparatuses, and/or user equipments (UE), and/or machine-type communication devices 102 are provided wireless access via at least one base station (not shown) or similar wireless transmitting and/or receiving node or point. A communication device is provided with an appropriate signal receiving and transmitting apparatus for enabling communications, for example enabling access to a communication network or communications directly with other devices. The communication device may access a carrier provided by a station or access point, and transmit and/or receive communications on the carrier.

In the following certain examples are explained with reference to mobile communication devices capable of communication via a wireless cellular system and mobile communication systems serving such mobile communication devices. Before explaining in detail the examples of the disclosure, certain general principles of a wireless communication system, access systems thereof, and mobile communication devices are briefly explained with reference to Figures 1, 2 and 3 to assist in understanding the technology underlying the described examples.

Figure 1 shows a schematic representation of a wireless communication system 100. The wireless communication system 100 comprises one more devices 102 such as user equipments (UEs), or terminals. The wireless communication system 100 also comprises a 5G system (5GS), as shown in Figure. The 5GS comprises a 5G radio access network (5G-RAN) 106, a 5G core network (5GC) 104 comprising one or more network functions (NF), one or more application functions (AFs) 108, and one or more data networks (DNs) 110.

The 5G-RAN 106 may comprise one or more gNodeB (gNB) distributed unit (DU) functions connected to one or more gNodeB (gNB) centralized unit (CU) functions.

The 5GC 104 comprises an access management function (AMF) 112, a session management function (SMF) 114, an authentication server function (AUSF) 116, a user data management (UDM) 118, a user plane function (UPF) 120, a network exposure function (NEF) 122 and/or other NFs (such as a location management function (LMF) (not shown)). Some of the examples as shown below may be applicable to 3GPP 5G standards. However, some examples may also be applicable to 5G-advanced, 4G, 3G and other 3GPP standards.

In a wireless communication system 100, such as that shown in Figure 1, mobile communication devices/terminals or user apparatuses, and/or user equipments (UE), and/or machine-type communication devices are provided with wireless access via at least one base station or similar wireless transmitting and/or receiving node or point. The terminal is provided with an appropriate signal receiving and transmitting apparatus for enabling communications, for example enabling access to a communication network or communications directly with other devices. The communication device may access a carrier provided by a base station or access point, and transmit and/or receive communications on the carrier.

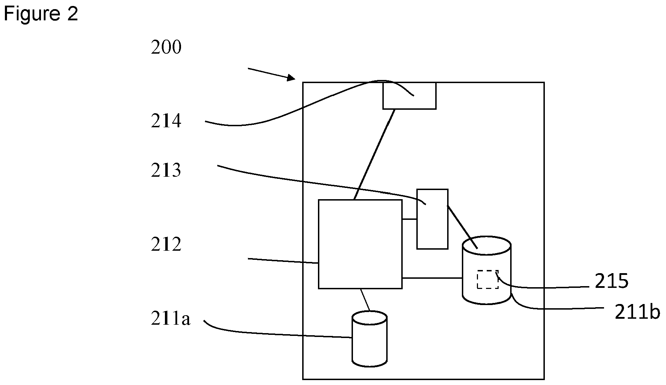

Figure 2 illustrates an example of a control apparatus 200. The control apparatus 200 may be for controlling a function of one or more network entities/network functions, such as the entities of the 5G-RAN or the 5GC as illustrated on Figure 1. The control apparatus 200 comprises at least one random access memory (RAM) 211a, at least one read only memory (ROM) 211b, at least one processor 212, 213 and an input/output interface 214. The at least one processor 212, 213 is coupled to the RAM 211a and the ROM 211b. The at least one processor 212, 213 may be configured to execute an appropriate software code 215. The software code 215 may for example allow to perform one or more steps to perform one or more of the present aspects or examples. The software code 215 may be stored in the ROM 211b. The control apparatus 200 may be interconnected with another control apparatus 200 controlling another entity/function of the 5G-AN or the 5GC. In some examples, each function of the 5G-AN or the 5GC comprises a control apparatus 200. In alternative examples, two or more functions of the 5G-AN or the 5GC may share a control apparatus. The control apparatus 200 may comprise one or more circuits, or circuitry (not shown) which may be configured to perform one or more of the present aspects or examples.

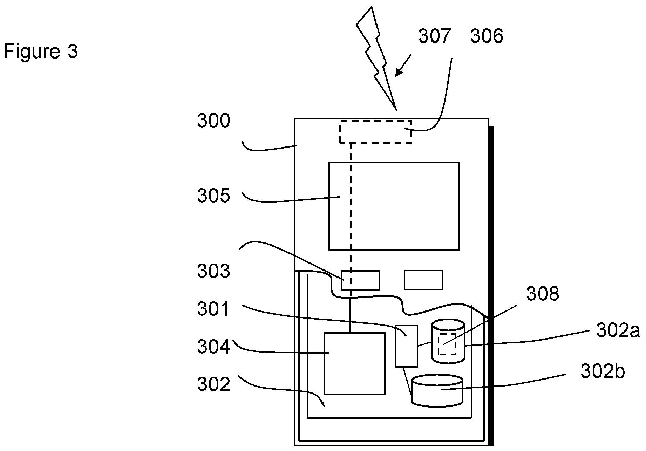

Figure 3 illustrates an example of a device 300, such as the terminal illustrated in Figure 1. The device 300 may be provided by any device capable of sending and receiving signals, such as radio signals. Non-limiting examples of a device are an activator device, a reader device, a passive device, an IoT device, a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CIoT) device or any combinations of these or the like. The device 300 may provide, for example, communication of data for carrying communications. The communications may be one or more of voice, electronic mail (email), text message, multimedia, data, machine data and so on.

The device 300 may receive signals over an air or radio interface 307 via appropriate apparatus for receiving and may transmit signals via appropriate apparatus for transmitting radio signals. In Figure 3, a transceiver apparatus is designated schematically by block 306. The transceiver apparatus 306 may be provided for example by means of a radio part and associated antenna arrangement. The antenna arrangement may be arranged internally or externally to the mobile device.

The device 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a. The device 300 may comprise one or more circuits, or circuitry (not shown) which may be configured to perform one or more of the present aspects or examples.

The device 300 may be a passive device in that it does not have a battery or any other devices with energy storage capability. Such a passive device is completely dependent on the availability of an external source of energy. The device 300 may be semi-passive with limited energy storage capability that do not need to be replaced or recharged manually.

The processor, storage and other relevant control apparatus may be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

For internet of things (IoT) applications, 3GPP has specified narrowband IoT (NB-IoT), enhanced machine type communications (eMTC) and NR reduced capability (RedCap) to satisfy requirements on low cost and low power devices for wide area IoT communications. IoT devices may often consume tens, or hundreds, of milliwatts (mW) of power during transceiving. The cost of these IoT device may also be low (e.g. within the range of a few US dollars). However, to achieve the outcome of the so-called 'Internet of Everything', IoT devices with a considerably lower cost and considerably lower power consumption are needed. In particular, for systems with a large number of applications requiring battery-less devices (i.e. devices that do not comprise an internal battery or energy storage device).

The number of IoT connections has been growing rapidly in recent years and is predicted to be hundreds of billions of device by 2030. With more and more devices and entities expected to be interconnected for improving production efficiency and increasing comforts of life, there are demands for a further reduction in the size, cost, and power consumption of these IoT devices. In particular, a regular replacement of batteries for IoT devices is impractical due to the time and cost that this would incur. Some devices are configured to use energy harvested from the environment to power IoT devices for self-sustainable communications. For example, in applications with a huge number of devices, like ID tags and sensors.

An identified issue with existing 3GPP technologies is the capability of cooperating with energy harvesting considering the limited size of devices that typically use energy harvesting. As previously discussed, radio devices may consume tens, or hundreds, of mW of power for transceiver processing. For example, for an NB-IoT module, the typical current consumption for receive processing may be approximately 60 milliamps (mA) with a supply voltage higher than 3.1V, and 70mA for transmit processing at 0 decibel-milliwatt (dBm) transmit power. However, the output power provided by typical energy harvester is often below 1 milliwatt, considering the small size of the devices. Since the available power is far less than the consumed power, it is impractical to power radio devices directly by energy harvesting in most cases.

Systems have attempted to address the problem identified above by integrating energy harvesting with a rechargeable battery or supercapacitor. However, both rechargeable batteries and supercapacitors may suffer from a shorten lifetime in many cases. It is hard to provide a constant charging current/voltage through energy harvesting, however continuous charging over time is needed due to the low output power from energy harvester. A varying charging current with continuous charging over long periods of time are harmful to battery life. For a supercapacitor, the lifetime will also be significantly reduced in high temperature environments. For example, the lifetime may be less than 3 years at 50 degrees centigrade. Furthermore, by integrating an energy storage device within these IoT devices, the overall device size will be significantly increased. As a small size 'button' battery can only provide a current of a few milliamps, a battery with a much larger physical size (e.g., a AA battery) is usually needed to power radio/cellular devices. However, the size of these larger batteries may be larger than the device/module itself. To store energy for a suitable duration for working (e.g., one second), the required capacitance of a supercapacitor would be in the region of hundreds of mill-farads. However, the size of such supercapacitors may be larger than the device/module. Furthermore, rechargeable batteries and supercapacitors may be more expensive than the device/module itself. Even purchased in large quantities, the cost of a suitable battery or supercapacitor may be the same as the rest of the device/module itself (i.e. the cost of each unit would be doubled if it comprised a battery/supercapacitor).

Radio frequency identity (RFID) is a well-known technology supporting devices (such as tags, cards, etc.) that do not have a battery. The power consumption of passive RFID tags can be as low as 1 mW. Some techniques employed with RFID that enable such low power consumption are envelope detection for downlink data reception, and backscatter communications for uplink data transmission. Backscatter (or backscattering) is the reflection of waves, particles, or signals back to the direction from which they came (or others).

RFID may be utilised for short-range communications, whereby a typical effective range is less than 10 meters. However, due to limitations the air interface of RFID, the simple transmission scheme of RFID is the obstacle to improving its link budget and capability of supporting a scalable network.

Backscatter communication may be achieved with very low power usage. Due to this, many non-3GPP technologies have put efforts into related research, such as Wi-Fi, Bluetooth, ultra-wide band (UWB), and long range (LoRa). A few microwatts of power consumption may be supported for passive tags based on, or with small modifications, to the above air interfaces.

A passive radio/passive device is a device that harnesses energy from wireless signals sent on specific carriers and/or bandwidths and charges circuitry that, once activated, will emit/reflect a signal. The reflected signal encodes at least the ID of the passive device. A typical system architecture around a passive radio may comprise:
1) An activator: a device that sends an activation signal targeted at waking up the passive device.
2) A passive radio: harnesses energy over a range of frequencies and listens for activation signals. Once such a signal is detected, the passive radio emits/reflects a signal which is specific to that radio ID.
3) A reader: a device that listens and detects the passive radio signals. The reader may or may not be collocated with the activator.

Two types of passive devices have been identified: (Passive) Pure battery-less devices with no energy storage capability, and dependent on the availability of an external source of energy, (Semi-Passive) Devices with limited energy storage capability that do not need to be replaced or recharged manually.

Device categorization based on corresponding characteristics (e.g. energy source, energy storage capability, passive/active transmission, etc.) may be discussed during the study, in relation with the relevant use cases. The device's peak power consumption shall be limited by its practical form factor for the intended use cases, and shall consider its energy source.

As part of a 3GPP study item, these devices may also be split into three device types: Device A - Passive device with no energy storage; Device B - Passive device with energy storage; Device C - active device with energy storage. Design targets for power consumptions for these device types may be: Device A ≤ 10 µW; Device A < Device B < Device C; Device C ≤ 1 mW. Device complexity design targets for these types may be: Device A: Comparable to UHF RFID; Device A ≤ Device B ≤ Device C; Device C: Orders-of-magnitude lower than NB-IoT.

Ambient IoT Devices are limited in their communication range, especially device types A & B. Estimated activation ranges and response ranges are approximately between 10 and 100 meters. This poses a challenge for the Ambient IoT Device discovery and for mobility of either the ambient IoT Device or the activator/reader devices. A limitation in the link budget is the activator to Ambient IoT Device range, which is approximately 10 meters. This is illustrated in Figure 1 in which an example of an Ambient IoT Device is named a `tag'. The tag is an example of an ambient IoT device. In other examples, any other suitable passive device may be used.

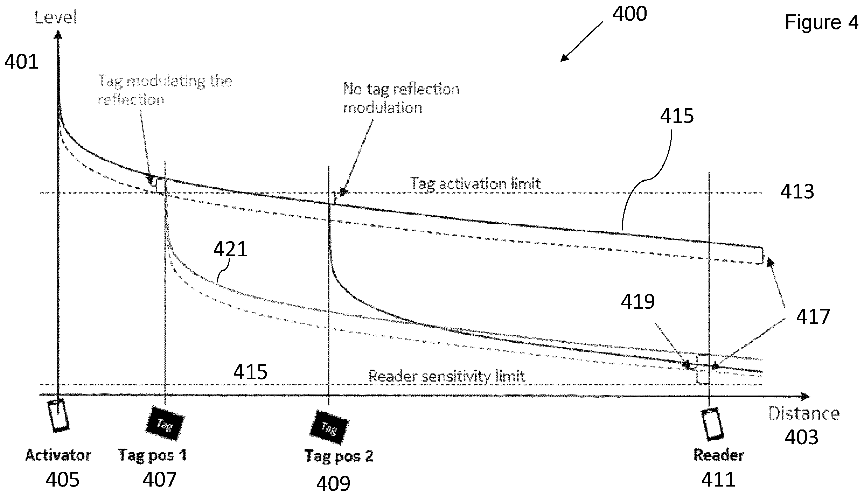

Figure 4 shows an example graphical representation of ambient IoT activation range and limitation with ambient IoT reader range and sensitivity.

The graph 400 has `level' 401 on the y-axis. The level may be signal intensity, power, etc. The graph 400 has 'distance' 403 on the x-axis. There is shown an activator 405 at 0,0 on the graph. There is also a first tag 407 and a second tag 409. The first tag 407 is closer to the activator 405 than the second tag 409. There is also a reader 411, which is furthest away from the activator 405. In some examples, the activator 405 and the reader 411 are the same.

There is shown a 'tag activation limit' 413 which indicates the minimum power level needed for each tag to function. This is the minimum amount of energy that each tag can harness in order to function. There is also shown a 'reader sensitivity limit' 415 which is the minimum power level for the reader to receive a response signal from a tag.

The activator 405 transmits an activation signal 415 towards the tags 407, 409. As seen in Figure 4, at the distance of the first tag 407, the level of the signal 415 is above the 'tag activation limit' 413. This means that there is sufficient energy for the first tag 407 to reflect and modulate the received signal from the activator 405. This reflected signal is labelled 421. When the reflected signal 421 reaches the reader 411, the level of the reflected signal 421 is above the 'reader sensitivity limit' 415. Therefore, the reader 411 is able to read the signal 421.

However, at the distance of the second tag 409 away from the activator 405, the level of the signal 415 is below the 'tag activation limit' 413. Therefore, there will be no tag reflection modulation.

Label 417 shows activator 405 transmit power step of -x dB (x<y) with maintained successful reading, with an activator 405 headroom of at least x dB. Label 419 shows the margin to sensitivity limit for successful reading is y dB.

In summary, in this example, there will be a successful tag reading for the first tag 407, but a reading failed for the second tag 409 (due to the activator to tag distance being too large).

Given that the activation range is very limited, this means that many communications will fail to be received successfully. Furthermore, there is no way to determine when an Ambient IoT Device is out of activation range and thus needs to be activated by a new entity (activation reselection).

One or more of the following examples aims to address one or more of the problems identified above.

In examples, there is provided an apparatus (e.g. for a reader device) comprising: means for obtaining, from a configuration, a first characteristic associated with response signals to be received from a passive device; means for receiving, from the passive device, at least one response signal; and means for determining that a second characteristic of the at least one response signal is different to the first characteristic.

This will be described in more detail below.

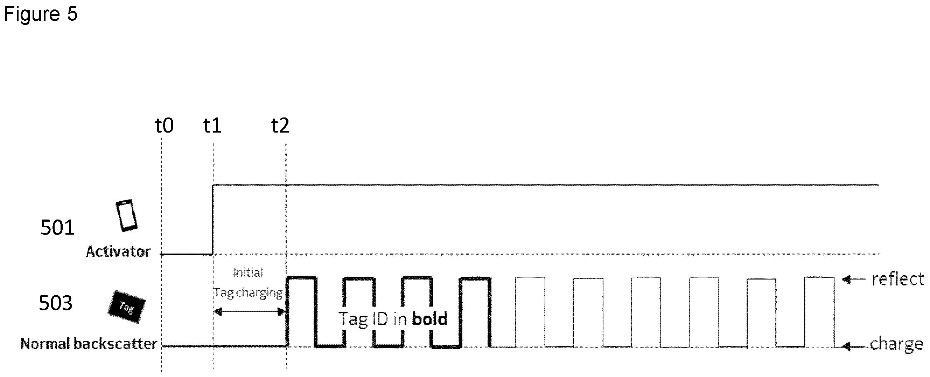

Figure 5 shows an example graphical representation of normal ambient IoT activation and response signals.

In a normal in-coverage scenario, a passive device (e.g. an ambient IoT device) will be charged by the activation signal. The passive device may be type A and/or B, as discussed above. Once the energy level is sufficient, the device will respond with a reflected and modulated signal. The reflected signal has a known and constant bit rate. The bit rate may be determined by the activation signal and/or the passive device.

There is provided an activator device 501 and a passive device 503. An example of a passive device 503 is an ambient IoT device, a tag, a fob, etc. It is assumed in this example that the passive device 503 is within range of the activator device 501.

At time zero (t0), the activator 501 is not transmitting an activation signal. At t1 onwards, the activator 501 transmits an activation signal. Between t1 and t2, the passive device 503 receives the activation signal and charges the passive device 503 in this time period. At t2, the passive device 503 reflects the signal. The passive 503 may also modulate the signal. The reflected signal may comprise an indication of an identity (ID) of the passive device 503. The device ID is shown in bold in Figure 5.

The reflection of the signal may be referred to as backscatter.

The transmission of the reflected signal from the passive device 503 continues in a periodic manner, switching between transmitting and charging. This duty cycle may be predetermined, or configured by the activation signal. Duty cycle is the ratio of time the passive device 503 is transmitting (e.g. referred to as 'ON') compared to the time the passive device 503 is charging (e.g. referred to as 'OFF'). Duty cycle, sometimes called "duty factor," is expressed as a percentage of ON time. A 60% duty cycle is a signal that is ON 60% of the time and OFF the other 40%. In this examples of Figure 5, there is as 50% duty cycle.

In examples, there is a reduced response (e.g. a reduced reflected signal) from a passive device that is close the edge of activation coverage. A passive device that is 'slightly' out of activation coverage may still be charged based on the activation signal, however it cannot reflect the signal with the configured intensity (e.g. data rate or duty cycle) as desired.

In examples, a passive device reflects or responds to the activation signal with a 'reduced' response. In the following, the reflected signal may be termed the 'response signal'. The reduced response signal includes a changed characteristic of the response signal. The changed characteristic is with respect to a characteristic of a configuration that a specific passive device. Each passive device may have a configuration, e.g. at the activator device, passive device, and the reader device. The configuration comprises one or more characteristics associated with the expected response signal from a passive device. For example, for passive device A, there is a configuration that specifies that the response signal from passive device A shall have characteristic A. As a reduced response, passive device A reflects the activation signal as a reduced response signal with characteristic B.

Some examples of characteristics of the response signal include data rate, duty cycle, peak power, etc.

In examples, a passive device may respond with at least one of two types of response signals: i) a reduced data rate response. The response may also be delayed (in time). For example, to allow more time to charge the passive device. The response may include the ID of the passive device (with no data); ii) a reduced duty cycle response. The response may also be delayed. The response may include the ID of the passive device (with no data).

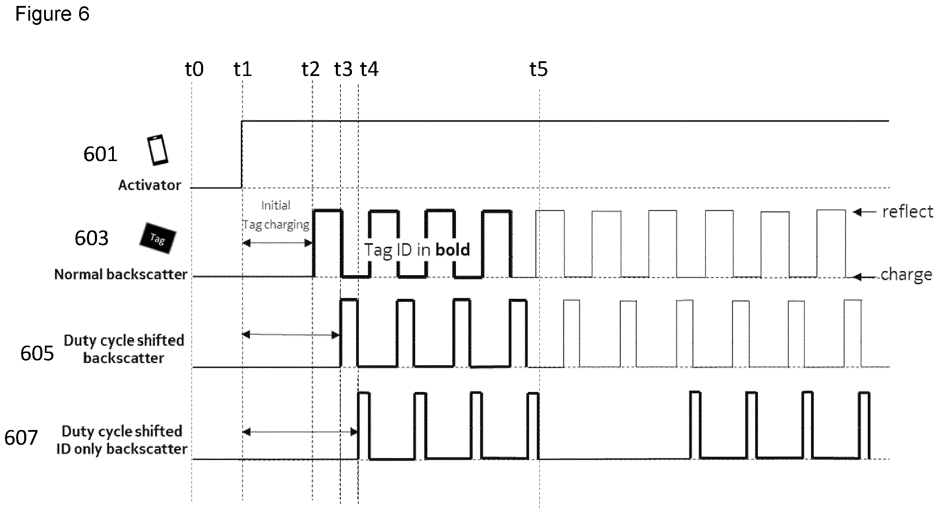

The reduced response may be used by passive devices out of activation coverage. For example, slightly out of activation coverage. The reduced response may also be used by passive devices that are in coverage. For example, just in activation coverage. These passive devices may be termed edge devices, or on the edge of activation coverage. The reduced response may be based on the device implementation whether to reduce data rate or duty cycle. Examples of the reduced duty cycle response signals are shown in Figure 6.

A passive device such as an ambient IoT device of type A and/or B is able to reflect/respond when an activator device is providing sufficient energy in form of an activation signal. As such, if the energy of the received activation signal if below a certain level, the passive device will not be able to reflect/response (e.g. backscatter) its response with a default duty-cycle. This may be because the passive device needs more time to charge in-between the reflection states than the default duty-cycle allows for. In examples, the passive device can, in those scenarios, prioritize to only respond with its ID and omit the data, reduce a data rate, or reduce the duty-cycle of the reflective state. These allow more time for the passive device to charge and thereby maintain its connection to an ambient IoT network. In some examples, an ambient IoT device of type A will prefer to reduce its duty-cycle. In some examples, an ambient IoT device of type B may choose to respond only with its ID, or reduce its duty cycle, or do both at the same time.

Figure 6 show example graphical representations of ambient IoT activation and reduced response signals.

In a normal in-coverage scenario, a passive device (e.g. an ambient IoT device) will be charged by the activation signal. Once the energy level is sufficient, the device will respond with a reflected and modulated signal. The reflected signal has a known and constant bit rate. The bit rate may be determined by the activation signal and/or the passive device.

There is provided an activator device 601 and a passive device with 'normal' backscatter 603. There is also provided a passive device with a reduced duty cycle 605. There is also provided a passive device with a reduced duty cycle and ID transmission 607. The ID transmission 607 means that an ID of the device is transmitted, with no associated data. An example of a passive device is an ambient IoT device, a tag, a fob, etc.

Passive devices 605 and 607 may be further away from the activator 601, compared to passive device 603. Passive devices 605 and 607 may be on the edge of activation range.

At time zero (t0), the activator 601 is not transmitting an activation signal. At t1 onwards, the activator 601 transmits an activation signal.

Between t1 and t2, the passive devices 603, 605, 607 receive the activation signal and charges the passive devices 603, 605, 607 in this time period.

At t2, the passive device 603 has sufficient energy to reflect the signal. The passive device 603 reflects the signal. The passive device 603 may also modulate the signal. The reflected signal may comprise an indication of an identity (ID) of the passive device 503. The device ID is shown in bold in Figure 6. The reflection of the signal may be referred to as backscatter. The transmission of the reflected signal from the passive device 603 continues in a periodic manner, switching between transmitting and charging. This duty cycle may be predetermined, or configured by the activation signal.

At t2, the energy received by the passive devices 605 and 607 is not sufficient in order for the devices to reflect the signal with the characteristics determined by a default configuration. For example, the passive devices 605 and 607 do not have sufficient energy to reflect the signal with the default duty cycle, as per a default configuration.

At t3, the passive device 605 reflects the signal/responds to the signal with a reduced duty cycle. The duty cycle is reduced with respect to a default duty cycle. The reduced duty cycle has a reduced 'ON' time with respect to the default duty cycle. As the 'ON' time is reduced (which is the time reflecting the signal) this means that there is a greater 'OFF' time, which is more time for charging. For example, the default duty cycle is 50% (as seen for passive device 603), while passive device reflects with a duty cycle of 33%. The passive device 605 may reduce the duty cycle the further it moves away from the activator 601.

The passive device 605 provides an ID associated with the device 605 for a number of cycle, followed by cycles of data. The ID is shown as a bold line in Figure 6, with the data shown in a non-bold line. In this example, the ID is transmitted first, followed by the data. In other examples, data may be transmitted first, followed by the ID.

At t4, the passive device 607 reflects the signal/responds to the signal with a reduced duty cycle. The duty cycle is reduced with respect to a default duty cycle. The passive device 607 reflects an ID associated with the passive 607. The passive device does not transmit any associated data/payload data. At t5, the passive device 607 stops reflecting the signal and has an extended charging period. Following the extended charging period, the passive device 607 begins to reflect the signal again (with the ID only).

As seen in Figure 6, a response signal (which may also be referred to as a reflected signal or backscatter) may either comprise: i) an ID of the passive device and data/payload data (e.g. 603 and 605), or ii) an ID of the passive device (e.g. 607). For option ii), the passive device refrains from including payload data in the response signal. By refraining from including payload data in the response signal, this is an indication that the passive device is almost out of coverage and/or moving out of coverage.

In the example of Figure 6, the passive devices reflect the activation signal with a reduced duty cycle in order to extend the activation range. In other examples, a different characteristic of the reflected signal is changed. For example, the reduced duty cycle is replaced by a reduced data rate. This may have a similar implication for the passive device and the energy required to reflect a given set of data.

In some examples, multiple characteristics of the reflected signals are changed (compared to a default configuration). For example, a passive device reflects an activation signal with a reduced duty cycle and a reduced data rate.

In this way, some of the examples enable passive devices, such as ambient IoT devices, to respond with lower data rates and/or a lower duty cycle to extend ambient IoT activation range and provide information to the reader that the ambient IoT device is reaching the activation range. The lower data rates and/or the lower duty cycle allow the ambient IoT reader to trigger a related signalling framework for the activator and reader to take needed re-selection actions to allocate a new activator device that is within range of the ambient IoT device.

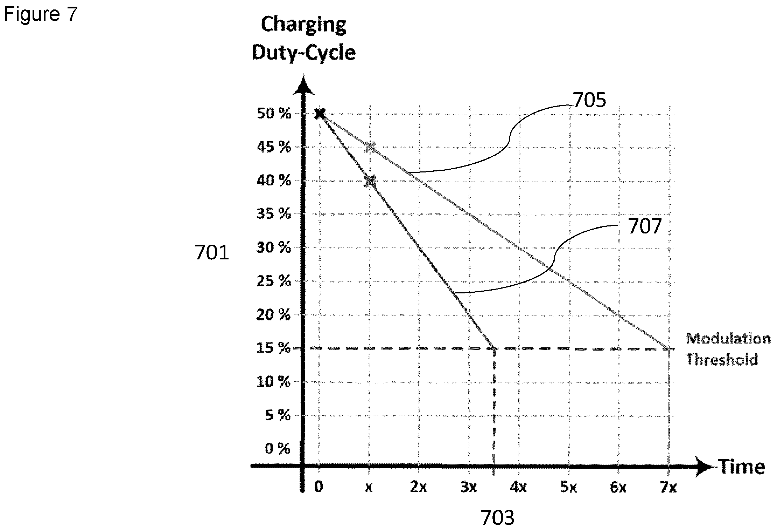

In examples, a reader device determines that a characteristic of a reflected signal (from a passive device) is different to an expected characteristic. For example, the characteristic may be a duty cycle. The reader device may determine a reduced duty cycle of the reflected/responded signal. The reader device may, based on at least two determinations of the reduced duty cycle, determine an estimated remaining time that the passive device will remain in activation range. The ratio of 'ON' to 'OFF' of the duty cycle of the signal reflected by the passive device may be proportional to the distance between the activator and the passive device. Examples of this are shown in the Figure 7 below. The reader device may also determine that a passive device omitting to its payload (data) and providing only ID (as backscatter) as an indication that the passive device is moving out of activation range.

Figure 7 shows an example graphical representation of a duty cycle change from an ambient IoT device moving out of activation range.

The graph 700 has duty cycle on the y-axis 701 and time on the x-axis 703.

At t0, a first signal associated with a first device 705 and a first signal associated with a second device 707 is determined/received by a reader. The first signals have been reflected/transmitted by the first and second (passive) devices respectively. The first signals received at t0 have a duty cycle of 50% which is plotted on the graph 700.

At tx, a second signal associated with the first device 705 and a second signal associated with the second device 707 is determined/received by the reader. The second signal associated with the first device 705 has a duty cycle of 45%. In this way, the duty cycle is said to be 'reduced'. The second signal associated with the second device 707 has a duty cycle of 40%.

Based on the first and second signals associated with the first device 705, the reader determines an estimated time of 7x before the first device is out of activation range. This example determination is based on an assumption of a modulation threshold of 15%, for the duty cycle. Below 15%, the passive device is not able to transmit payload data and/or ID information. The value of 15% is an example only. In other examples, the modulation threshold is higher or lower than 15%.

Based on the first and second signals associated with the second device 707, the reader determines an estimated time of 3.5x before the first device is out of activation range.

The reader may update the determination of the estimated time if further signals are received from the first and/or second devices. The determination of the estimated time may be based on the assumption that the device is moving away from the activator device with a constant velocity.

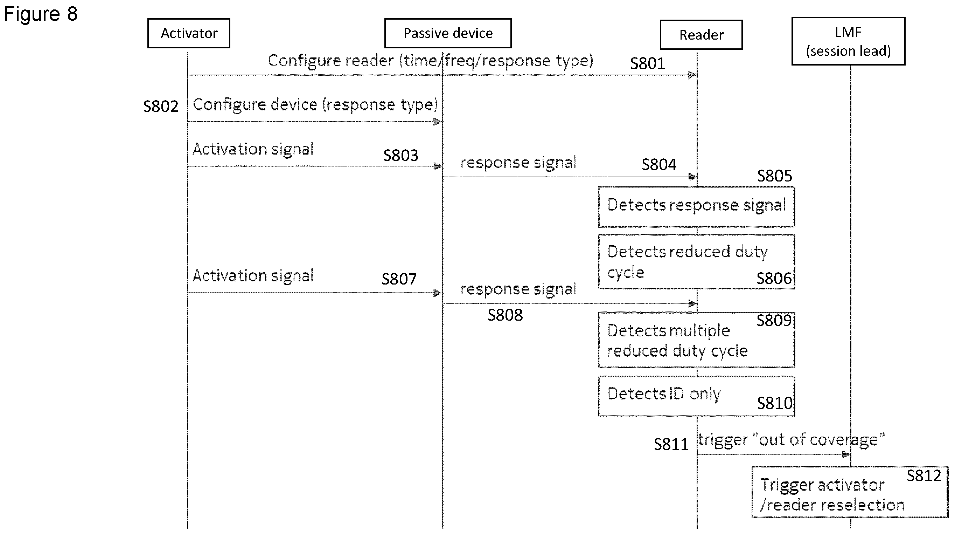

Figure 8 shows an example signalling diagram between an activator, a passive device, a reader, and a network function.

At S801, an activator (which may be referred to as an activator device') provides a configuration to a reader (which may be referred to as a 'reader device'). The configuration is associated with a passive device. The passive device may be, for example, as passive IoT device. The configuration may be unique to the passive device. The configuration may be associated with a plurality of passive devices. The configuration may provide information related to expected characteristics of response signals to be received from the passive device. Response signals are activation signals that are reflected by the passive device. For example, the configuration may comprise at least one of: time, frequency, response type, etc, information for the passive device. For example, the configuration may indicate a (default) duty cycle and/or (default) data rate for the passive device.

In other examples, the reader is pre-configured with the configuration, or receives the configuration from another entity.

Said another way, the reader obtains the configuration for the passive device (e.g. from the activator, or from a data store), wherein the configuration indicates a characteristic for response signals from the passive device.

At S802, the activator provides a configuration to the passive device. The configurations provided to the reader and passive device may be similar, or the same, in some examples. For example, the configuration may comprise a response type that is expected for response signals provided by the passive device. For example, the configuration may indicate a (default) duty cycle and/or (default) data rate for the passive device.

In other examples, the passive device is pre-configured with the configuration, or receives the configuration from another entity.

Said another way, the passive device obtains the configuration for the passive device (e.g. from the activator, or from a data store), wherein the configuration indicates a characteristic for response signals to be provided from the passive device.

In this example of Figure 8, the configurations comprise at least a (default) duty cycle for the passive device. In this example, the duty cycle is the characteristic of the response signal. In other examples, any other suitable characteristic may be specified in the configuration.

At S803, the activator transmits an activation signal to the passive device. The activator may transmit the activation signal because, for example, there is data at the passive device that is needed/requested. In other examples, an activation signal is sent to localise (e.g. find the position) the passive device.

At S804, the passive device receives the activation signal. The passive device determines that energy received from the activation signal is below a threshold value. Said another way, the passive device determines that, based on the received signal, it cannot provide a response signal with the (default) duty cycle indicated in the configuration.

The activator may be at a certain distance away from the passive device such that the energy received from the activation signal is not sufficient to power the passive device to transmit a response signal with the (default) duty cycle.

The passive device transmits a response signal with a reduced duty cycle. The duty cycle is reduced with respect to the default duty cycle. In some examples, the default duty cycle is referred to as a first characteristic, and the reduced duty cycle is referred to as a second characteristic.

At S805, the reader detects/receives the response signal from the passive device.

At S806, the reader determines that the response signal has a different duty cycle than the default duty cycle. In this way, the reader determines the reduced duty cycle.

At S807, the activator transmits a further activation signal to the passive device.

At S808, the passive device receives the further activation signal. Since receiving the activation signal of S803/S804, the passive device may have moved further away from the activator. The passive device determines that energy received from the further activation signal is below the threshold value. In this way, the passive device determines that, based on the received further activation signal, it cannot provide a response signal with the (default) duty cycle indicated in the configuration.

The passive device transmits a further response signal with a reduced duty cycle. The duty cycle is reduced with respect to the default duty cycle. The duty cycle of the further response signal may be further reduced, compared to the response signal (as the passive device is now further from the activator).

In this example, the further response signal comprises an ID of the passive device. The further response signal omits the inclusion of payload data. In this way, the further response signal comprises the ID (only).

At S809, the reader detects/receives the further response signal from the passive device. The reader determines that the further response signal has a different duty cycle than the default duty cycle.

Based on the duty cycle of the response signal and the duty cycle of the further response signal, the reader determines an estimated time that the passive device will remain in coverage of the activator. The determination of the estimated time may also utilise a modulation threshold value. For example, the modulation threshold value is a minimum duty cycle that the passive device may be able to transmit (as seen in Figure 7).

At S810, the reader determines that the further response signal comprises the ID of the passive device, and that the payload data is omitted.

At S811, the reader determines that the passive device is moving out of coverage. The reader may determine that the passive device is moving out of coverage based on the reducing duty cycle of the response signal and further response signal. The reader may determine that the passive device is moving out of coverage based on the further response signal comprising (only) the ID of the passive device. The configuration may include an indication that the inclusion of the ID of the passive device (only) in the response signal means that the passive device is moving out of coverage.

In response to determining that the passive device is moving out of coverage, the reader provides a message, to a network function, with information about the passive device moving out of coverage. The message may comprise an "out-of-coverage" warning/indication, or similar.

The message may comprise the determined estimated time.

The network function may be, for example, a location management function (LMF). The LMF may be the session lead.

At S812, the network function receives the message with the information about the passive device moving out of coverage. In response to receiving the message, the network function triggers a re-selection procedure. The re-selection procedure may comprise selecting a 'new' activator and/or reader for the passive device. The 'new' activator and/or reader should be closer to the passive device.

It should be understood that one or more of the steps of Figure 8 may not be performed in some examples, or may be performed in a different order. Furthermore, in Figure 8 that characteristic of the response signal that is determined is duty cycle. In other examples, other characteristics of the response signal are changed by the passive device in order to extend coverage, such as for example data rate, power, peak power, etc.

One or more of the examples above have the advantage of extending the coverage range for passive devices, such as ambient IoT devices. There is also a faster/more efficient detection of passive devices moving out of coverage. Therefore, there is a lower risk of suddenly losing the connection to a passive device, because an 'out of coverage' message is communicated from the reader to the session lead before the connection is lost. The session lead (e.g. LMF) is able to make a more efficient and quicker determination of a new activator (e.g. a new ambient IoT activators) using the received message. It is also enables mobility indicators for Ambient IoT, and low power procedures for Ambient IoT mobility procedures as the session lead knows about the passive device moving out of coverage in advance. This allows the session lead trigger discovery procedures.

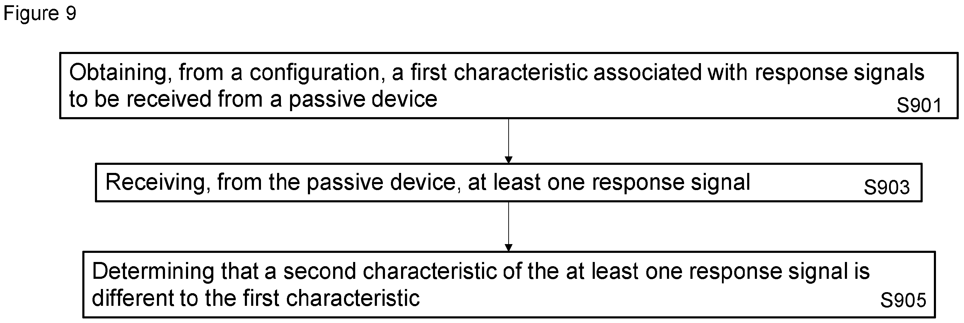

Figure 9 shows an example method flow performed by an apparatus. The apparatus may be comprised within a reader device. The apparatus may be for a reader device. The apparatus may be a reader device. The reader device may be an ambient IoT reader.

In S901, the method comprises obtaining, from a configuration, a first characteristic associated with response signals to be received from a passive device.

In S903, the method comprises receiving, from the passive device, at least one response signal.

In S905, the method comprises determining that a second characteristic of the at least one response signal is different to the first characteristic.

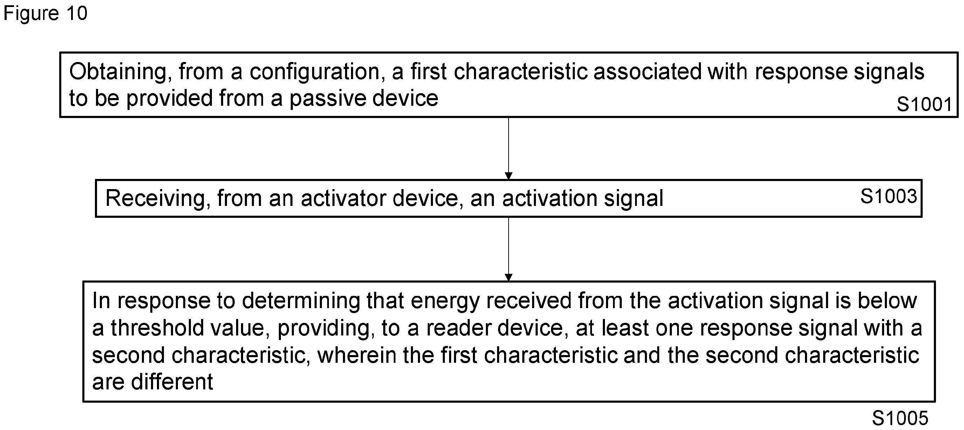

Figure 10 shows an example method flow performed by an apparatus. The apparatus may be comprised within a passive device. The apparatus may be for a passive device. The apparatus may be a passive device. The passive device may be an passive IoT device.

In S1001, the method comprises obtaining, from a configuration, a first characteristic associated with response signals to be provided from a passive device.

In S1003, the method comprises receiving, from an activator device, an activation signal.

In S1005, the method comprises in response to determining that energy received from the activation signal is below a threshold value, providing, to a reader device, at least one response signal with a second characteristic, wherein the first characteristic and the second characteristic are different.

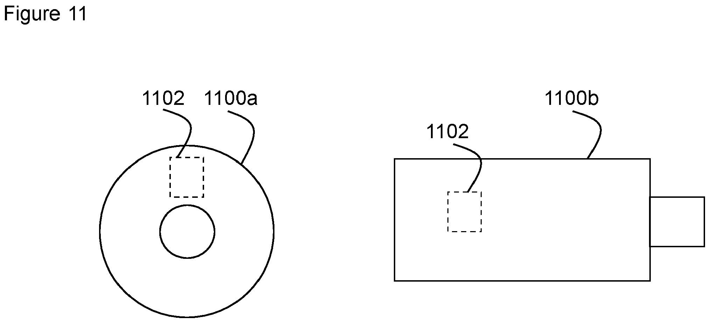

Figure 11 shows a schematic representation of non-volatile memory media 1100a (e.g. computer disc (CD) or digital versatile disc (DVD)) and 1100b (e.g. universal serial bus (USB) memory stick) storing instructions and/or parameters 1102 which when executed by a processor allow the processor to perform one or more of the steps of the methods of Figure 10 and/or Figure 11.

It is noted that while the above describes example embodiments, there are several variations and modifications which may be made to the disclosed solution without departing from the scope of the present invention.

The examples may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof. Any suitable means for performing the features described above may be present in each device or entity. The means may comprise a combination of hardware and software components. For example, the means for performing features may comprise at least one processor, and at least one memory storing instructions that, when executed by the at least one processor, cause steps to be performed by a device/entity.

The examples may be implemented by computer software stored in a memory and executable by at least one data processor of the involved entities or by hardware, or by a combination of software and hardware. Further in this regard it should be noted that any procedures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The term "non-transitory", as used herein, is a limitation of the medium itself (i.e. tangible, not a signal) as opposed to a limitation on data storage persistency (e.g. RAM vs ROM).

As used herein, "at least one of the following:<a list of two or more elements>" and "at least one of: <a list of two or more elements>" and similar wording, where the list of two or more elements are joined by "and", or "or", mean at least any one of the elements, or at least any two or more of the elements, or at least all of the elements.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples.

Alternatively, or additionally some examples may be implemented using circuitry. The circuitry may be configured to perform one or more of the functions and/or method steps previously described. That circuitry may be provided in the base station and/or in the communications device.

As used in this application, the term "circuitry" may refer to one or more or all of the following: (a) hardware-only circuit implementations (such as implementations in only analogue and/or digital circuitry); (b) combinations of hardware circuits and software, such as: (i) a combination of analogue and/or digital hardware circuit(s) with software/firmware and (ii) any portions of hardware processor(s) with software (including digital signal processor(s)), software, and memory(ies) that work together to cause an apparatus, such as the communications device or base station to perform the various functions previously described; and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device. The term circuitry also covers, for example and if applicable to the particular claim element, a baseband integrated circuit or processor integrated circuit for a mobile device or a similar integrated circuit in a server, a cellular network device, or other computing or network device.

The foregoing description has provided by way of exemplary and non-limiting examples a full and informative description of some embodiments. However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

1. An apparatus comprising:
means for obtaining, from a configuration, a first characteristic associated with response signals to be received from a passive device;
means for receiving, from the passive device, at least one response signal; and
means for determining that a second characteristic of the at least one response signal is different to the first characteristic.

2. The apparatus according to claim 1, wherein the means for obtaining comprises one of:
means for receiving, from an activator device, a message corresponding to the configuration for the passive device, wherein the configuration indicates the first characteristic associated with the response signals; and
means for retrieving the first characteristic of the configuration from a data store.

3. The apparatus according to claim 1 or claim 2, wherein the apparatus comprises:
means for providing, to a network function, a message based on the determination that the second characteristic of the received at least one response signal is different to the first characteristic.

4. The apparatus according to any of claims 1 to 3, wherein the means for providing comprises:
means for, based on the determining, providing a message to a network function indicating that a reselection procedure should be triggered for the passive device.

5. The apparatus according to any of claims 1 to 4, wherein the means for determining comprises:
means for determining that the passive device has insufficient energy to transmit a response signal as per the configuration on the basis of the second characteristic of the received at least one response signal being different to the first characteristic.

6. The apparatus according to any of claims 1 to 5, wherein the first characteristic comprises a first duty cycle, wherein the means for determining comprises:
means for determining that the received at least one response signal has a second duty cycle, wherein the second duty cycle is different to the first duty cycle.

7. The apparatus according to any of claims 1 to 6, wherein the first characteristic comprises a first data rate, wherein the means for determining comprises:
means for determining that the received at least one response signal has a second data rate, wherein the second data rate is different to the first data rate.

8. The apparatus according to any of claims 1 to 7, wherein the means for determining comprises:
means for determining that at least one further response signal has a third characteristic, wherein the third characteristic is different to the first and second characteristics;
means for determining, based on the second and third characteristics, an estimated time that the passive device will remain in coverage; and
means for providing, to the network function, information about the estimated time.

9. The apparatus according to any of claims 1 to 8, wherein the apparatus comprises:
means for determining that at least one response signal comprises an indication of an identity of the passive device without any payload data; and
means for, in response to determining that at least one response signal comprises an indication of an identity of the passive device without any payload data, providing, to a network function, a message indicating that the passive device is moving out of coverage.

10. The apparatus according to any of claims 1 to 9, wherein one of: the apparatus is for the reader device, the apparatus is comprised in the reader device, and the apparatus is the reader device.

11. An apparatus comprising:
means for obtaining, from a configuration, a first characteristic associated with response signals to be provided from a passive device;
means for receiving, from an activator device, an activation signal; and
means for, in response to determining that energy received from the activation signal is below a threshold value, means for providing, to a reader device, at least one response signal with a second characteristic, wherein the first characteristic and the second characteristic are different.

12. The apparatus according to claim 11, wherein the means for providing comprises:
means for, in response to determining that energy received from the activation signal is below a threshold value, reflecting and modulating the activation signal to provide, to a reader device, the at least one response signal with the second characteristic.

13. The apparatus according to claim 11 or claim 12, wherein the first characteristic comprises a first duty cycle, wherein the means for providing comprises:
means for, in response to determining that energy received from the activation signal is below a threshold value, providing, to the reader device, the at least one response signal with a second duty cycle, wherein the first duty cycle and the second duty cycle are different; or
means for, in response to determining that energy received from the activation signal is below a threshold value, providing, to the reader device, the at least one response signal with a second data rate, wherein the first data rate and the second data rate are different.

14. The apparatus according to claim 13, wherein at least one of: the second duty cycle is reduced with respect to the first duty cycle, and the second data rate is reduced with respect to the first data rate.

15. A method comprising:
obtaining, from a configuration, a first characteristic associated with response signals to be received from a passive device;
receiving, from the passive device, at least one response signal; and
determining that a second characteristic of the at least one response signal is different to the first characteristic.
